Europäisches Patentamt

(19) European Patent Office

Office européen des brevets

(11) Numéro de publication: **0 231 699 B1**

(12) **FASCICULE DE BREVET EUROPEEN**

(45) Date de publication du fascicule du brevet:
07.02.90

(51) Int. Cl.⁴: **C08F 8/50, C08L 23/04**

(21) Numéro de dépôt: **86402857.6**

(22) Date de dépôt: **19.12.86**

(54) Compositions de polymères de l'éthylene, un procédé pour leur préparation et leur application à l'obtention d'articles industriels.

(30) Priorité: **24.12.85 FR 8519117**

(43) Date de publication de la demande:
**12.08.87 Bulletin 87/33**

(45) Mention de la délivrance du brevet:
**07.02.90 Bulletin 90/6**

(84) Etats contractants désignés:
**AT BE CH DE ES FR GB GR IT LI LU NL SE**

(56) Documents cités:
**EP-A- 0 069 603**
**EP-A- 0 083 521**
**EP-A- 0 161 774**
**GB-A- 2 152 516**
**US-A- 4 535 125**

(73) Titulaire: **NORSOLOR S.A., Tour Aurore Place des Reflets, F-92080 Paris la Défense Cédex 5(FR)**

(72) Inventeur: **Audureau, Jöel, 50 Rue des Normands, F-62290 Noeux Les Mines(FR)**
Inventeur: **Piecuch, Edouard, 67 Bis rue Casimir Beugnet, F-62660 Beuvry-Les-Bethune(FR)**

(74) Mandataire: **Dubost, Thierry, c/o NORSOLOR Service Propriété Industrielle B.P. 57, F-62670 Mazingarbe(FR)**

**Description**

La présente invention concerne des compositions de polymères de l'éthylène, un procédé pour leur préparation et leur application à l'obtention d'articles industriels.

Il est connu de polymériser l'éthylène sous très haute pression et à température élevée en présence d'un initiateur de radicaux libres. On obtient de cette façon un polymère connu sous le nom de polyéthylène basse densité radicalaire. Quel que soit son indice de fluidité, ce polymère fait généralement preuve d'une étirabilité passable lors de la confection de gaine tubulaire et d'une médiocre résistance au déchirement. En revanche, il permet d'obtenir une bonne stabilité de la bulle lors de l'extrusion-souf-flage et il possède une processabilité excellente ; la processabilité est définie comme d'une part l'absence de rupture prématurée de l'extrudat ("melt fracture") et d'autre part la puissance consommée lors de l'extrusion.

Des améliorations substantielles à l'étirabilité et à la résistance au déchirement ont été apportées en préparant des copolymères d'éthylène et d'au moins une α-oléfine ayant de 3 à 12 atomes de carbone comme le propylène et le butène-1 en présence d'un système catalytique de type Ziegler. Cependant on constate, lors de leur extrusion-soufflage, une certaine instabilité de la bulle, une tendance spontanée à l'agrandissement des trous en cas de perforation de la bulle et une tendance à la rupture prématurée de l'extrudat.

On connait par ailleurs par le document FR-A-2519007 des copolymères modifiés de l'éthylène et d'au moins une α-oléfine ayant de 3 à 12 atomes de carbone, comprenant de 0,5 à 10 % en moles de motifs dérivés de ladite α-oléfine, caractérisés en ce que leur viscosité limite mesurée est comprise entre 1,5 et 10 fois leur viscosité limite calculée à partir de la distribution des masses moléculaires. Un procédé pour préparer ces copolymères modifiés consiste à mettre le copolymère en présence de 0,01 à 1 millimole par kilogramme de copolymère d'au moins un initiateur de radicaux libres à une température de 220 à 320°C pendant une durée de 5 à 200 secondes, dans une machine de transformation telle qu'une extrudeuse.

Les copolymères modifiés obtenus par ce procédé sont entièrement solubles et extractibles par les solvants habituels des polyoléfines, tels que notamment le trichlorobenzène et le xylène. Cependant on a constaté que les films préparés par extrusion-soufflage à partir de ces copolymères modifiés présentent de légers défauts qui ne peuvent être détectés que par des moyens analytiques très performants. Ainsi, par étude en lumière polarisée, apparaissent quelques défauts de surface dus à la présence de microparticules gélifiées qu'il était impossible de détecter par un simple test de solubilité et d'extraction par les solvants habituels. On a constaté d'autre part que l'utilisation de quantités d'initiateurs de radicaux libres supérieures à 1 millimole par kilogramme de copolymère conduit à la présence de gels (c'est-à-dire de particules non extractibles par les solvants, habituels) en quantité telle que les copolymères modifiés obtenus sont soit impossibles à mettre en oeuvre par la technique d'extrusion-soufflage, soit transformables en films présentant des défauts rédhibitoires pour leurs qualités d'usage.

On a maintenant trouvé possible d'obtenir des polymères modifiés de propriétés améliorées, en particulier conduisant à des films ne présentant pas de défauts de surface après étude en lumière polarisée, en mettant en présence le polymère et l'initiateur de radicaux libres dans les conditions de la présente invention.

La présente invention a pour objet des compositions contenant :

a) de 90 à 99,8 % en poids d'au moins un polymère modifié de l'éthylène et, le cas échéant, d'au moins une α-oléfine ayant de 3 à 12 atomes de carbone, ledit polymère contenant au moins 80 % en moles de motifs dérivés de l'éthylène et,

b) de 0,2 à 10 % en poids d'au moins une phase polymérique comprenant au moins un polymère contenant au moins 90 % en moles de motifs dérivés d'au moins une α-oléfine ayant de 3 à 12 atomes de carbone et au plus 10 % en moles de motifs dérivés de l'éthylène,

lesdites compositions ayant une viscosité limite mesurée comprise entre 1,5 et 100 fois leur viscosité limite calculée à partir de la distribution des masses moléculaires.

Le polymère modifié de l'éthylène a par rapport au polymère dont il dérive une masse moléculaire moyenne et une viscosité supérieures et un indice de fluidité inférieur.

Le polymère entrant dans la constitution de la phase polymérique peut être notamment le polypropylène (particulièrement le polypropylène isotactique), le polybutène-1, le poly(méthyl-4-pentène-1), le polydécène-1, un copoly(propylène-éthylène), un copoly(butène-1-éthylène) ou un copoly(propylène/butène-1/éthylène), ces derniers contenant moins de 10 % en moles de motifs dérivés de l'éthylène, ou encore un copoly(propylène-butène-1).

Les notions de viscosité limite mesurée $\eta_o^m$ et de viscosité limite calculée $\eta_o^c$ utilisées ici sont celles définies dans le document FR-A-2.519.007.

La présente invention a également pour objet un procédé de fabrication des compositionss décrites ci-dessus par modification d'un polymère (A) contenant au moins 80 % en moles de motifs dérivés de l'éthylène et au plus 20 % en moles de motifs dérivés d'au moins une α-oléfine ayant de 3 à 12 atomes de carbone, au moyen d'au moins un initiateur de radicaux libres mis en présence dudit polymère (A) à une température supérieure à la température de fusion dudit polymère (A) pendant une durée supérieure ou égale

2

au dixième du temps de demi-vie dudit intiateur à la température considérée, caractérisé en ce que l'initiateur de radicaux libres est, préalablement à sa mise en présence du polymère (A), dispersé dans au moins une phase polymérique (B) comprenant au moins un polymère contenant au moins 90 % en moles de motifs dérivés d'au moins une α-oléfine ayant de 3 à 12 atomes de carbone et au plus 10 % en moles de motifs dérivés de l'éthylène, ladite phase (B) étant présente en quantité telle que sa proportion dans la composition résultante soit comprise entre 0,2 et 10 % en poids.

Les polymères (A) sont bien connus et peuvent être obtenus par tout moyen connu consistant à polymériser l'éthylène ou à copolymériser l'éthylène avec au moins une α- oléfine ayant de 3 à 12 atomes de carbone, par exemple en présence d'un système catalytique de type Ziegler comprenant au moins un catalyseur à base de métal de transition des groupes IVB à VIB de la Classification Périodique et au moins un activateur comprenant un hydrure et/ou dérivé organométallique d'un métal des groupes IA à IIIA de la Classification Périodique. La (co) polymérisation peut ainsi être effectuée à une température comprise entre 20 et 200°C, sous une pression comprise entre 1 et 200 bars, en phase gazeuse (en lit fluidisé ou agité), en solution ou en suspension dans un hydrocarbure liquide inerte ayant au moins 6 atomes de carbone. La (co)polymérisation peut également être effectuée à une température comprise entre 160°C et 350°C, sous une pression comprise entre 200 et 2500 bars, le temps de séjour du système catalytique dans le réacteur de polymérisation étant compris entre 2 et 100 secondes. La (co)polymérisation peut être effectuée en présence d'un agent de transfert, tel que par exemple l'hydrogène, dans une proportion allant jusqu'à 2 % en moles. Les polymères (A) ont une densité généralement comprise entre 0,90 et 0,97.

Parmi les initiateurs de radicaux libres convenant à la mise en oeuvre du procédé selon l'invention, on peut citer notamment :
- les composés peroxygénés tels que par exemple les peroxydes, les peresters, les hydroperoxydes,
- les composés diazoïques tels un 2,2'-azo-bis(acyloxyalcane) comme le 2,2'-azo-bis(acétoxypropane), le 2,2'-azo-bis(2-acétoxy-4-méthylpentane), ou tel le 1,1'-azo-bis(1-formyloxycyclohexane), et
- les hydrocarbures possédant des liaisons carbone-carbone labiles tels que par exemple des diaryl-dialkylalcanes, comme le 2,3-diphényl-2,3-diméthylbutane (couramment désigné sous l'appellation biscumyle) ou le 3,4-diphényl3,4-diméthylhexane.

La dispersion de l'initiateur dans la phase polymérique est réalisée par tout moyen connu, choisi en fonction de l'état physique des constituants et/ou du dispositif choisi pour mettre en présence la dispersion d' initiateur avec le polymère (A). S'il est nécessaire de chauffer la phase polymérique (B), on opère avantageusement par malaxage à une température telle que l'initiateur de radicaux libres ne se décompose pas ou ne soit que faiblement altéré. La dispersion obtenue est ensuite mise en présence du polymère (A), avantageusement dans une machine de transformation des polymères, telle qu'un malaxeur ou une extrudeuse mono-vis ou bi-vis.

Cette mise en présence peut être réalisée selon un processus discontinu : le polymère (A) se présentant sous la forme de poudre de granulométrie comprise entre 1 et 500 µm ou de granulés est alors introduit dans la machine de transformation simultanément avec la dispersion d'initiateur; la dispersion d'initiateur peut être aussi préalablement homogénéisée avec le polymère (A) par exemple par mélange de poudre ou de granulés, le mélange homogène étant ensuite introduit dans la machine de transformation.

Cette mise en présence peut également être réalisée en continu sans que le polymère (A) soit au préalable isolé. On opère alors de la façon suivante : l'extrudeuse principale qui reçoit le polymère contenu dans le séparateur basse-pression d'une unité de polymérisation est munie d'une extrudeuse latérale alimentée en dispersion d'initiateur. L'extrudeuse latérale est chauffée et la dispersion est introduite dans l'extrudeuse principale dans laquelle elle se mélange au polymère (A). L'une et/ou l'autre de ces extrudeuses sont de préférence du type bi-vis. L'extrudeuse latérale peut être remplacée par une pompe à engrenages. Le polymère modifié qui s'écoule de l'extrudeuse principale peut ensuite être façonné de la même manière qu' un polymère non modifié.

La phase polymérique (B) contient avantageusement pour 100 parties en poids, de 0,02 à 10 parties en poids de l'initiateur de radicaux libres. La quantité choisie dépend du taux de modification que l'on souhaite apporter audit polymère (A) et de la masse moléculaire de l'initiateur. L'homogénéisation de quantités supérieures à 10 parties pour 100 est en effet difficile à réaliser.

Les polymères modifiés obtenus selon l'invention présentent par rapport aux polymères dont ils sont issus :
- un indice de fluidité $IF_2$ (mesuré à 190°C sous 2,16 kg selon la norme ASTM D 1238-73) très sensiblement diminué,
- un rapport des indices de fluidité (RIF) mesurés selon la norme ci-dessus respectivement sous 21,6 kg et 2,16 kg, très sensiblement augmenté.
- une facilité de mise en oeuvre au moins égale, malgré la diminution de l'indice de fluidité $IF_2$, et améliorée dans certaines applications.

Le procédé selon l'invention permet d'obtenir des polymères modifiés transformables en films d'épaisseur comprise entre 7 et 500 µm selon les techniques habituelles d'extrusion-soufflage ou d'extrusion au moyen d'une filière plate. Les films ainsi obtenus présentent une résistance à l'impact nettement augmentée. Ils présentent également un bel état de surface. caractérisé, après étude en lumière polarisée, par l'absence totale de microparticules gélifiées. Pour cette application on utilise avantageusement un polymère (A) ayant un indice de fluidité $IF_2$ compris entre 0,5 et 10 dg/min. Les polymères modifiés acquièrent, par le procédé selon l'invention, un indice de fluidité généralement compris entre 0,05 et 4 dg/min.

Le procédé selon l'invention permet aussi de modifier des polymères ayant des indices de fluidité $IF_2$ plus élevés, généralement compris entre 10 et 1000 dg/min. Les polymères modifiés acquièrent, par le procédé selon l'invention, un indice de fluidité généralement compris entre 0,5 et 150 dg/min. Les polymères ainsi modifiés trouvent une application intéressante dans la fabrication de pièces moulées par injection. Dans ce cas, à masse volumique et à indice de fluidité identiques, l'injectabilité (telle que définie ci-après) d'un polymère modifié selon l'invention est, de façon surprenante, supérieure à celle d'un polymère (A) non modifié. En particulier il est possible, et c'est là un avantage supplémentaire de la présente invention, de diminuer significativement la température d'injection pour injecter le polymère selon le même débit.

Les exemples suivants ont pour but d'illustrer l'invention de façon non limitative.

## EXEMPLES 1 à 16

Les polymères ci-après dénommés $A_1$ à $A_6$, sont des copolymères éthylène/α-oléfine dont les principales caractéristiques (nature et teneur de l' α-oléfine, densité ρ, indice $IF_2$, rapport RIF) figurent au tableau I ci-après. Dans ce même tableau figure la résistance à l'impact R.I., exprimée en grammes et mesurée (selon la norme ASTM D 1709) sur un filme d'épaisseur 50 µm obtenu par extrusion-soufflage à partir dudit polymère. Le polymère $A_7$ est un homopolymère de l'éthylène.

Tableau I

| (A) | Motifs constitutifs en % en moles | | | | ρ | $IF_2$ | RIF | R.I. |
|-----|--------|--------|--------|--------|-------|------|------|------|
| | $C_2H_4$ | $C_3H_6$ | $C_4H_8$ | $C_6H_{12}$ | | | | |
| $A_1$ | 96 | – | 4 | – | 0,918 | 0,8 | 26,4 | 170 |
| $A_2$ | 95,5 | – | 4,5 | – | 0,918 | 2,2 | 28 | 140 |
| $A_3$ | 98,25 | – | 1,75 | – | 0,934 | 1,4 | 24,1 | 88 |
| $A_4$ | 92,8 | 1,7 | 5,5 | – | 0,911 | 1,0 | 26 | 460 |
| $A_5$ | 95,7 | – | – | 4,3 | 0,931 | 0,9 | 25,7 | 170 |
| $A_6$ | 96,2 | – | 3,8 | – | 0,921 | 20 | * | ** |
| $A_7$ | 100 | – | – | – | 0,957 | 15 | * | ** |

\* $IF_{21\,6}$ n'est pas mesurable pour ces produits.
\*\*non significatif

On utilise, en tant que phase polymérique (B) :
- un polypropylène isotactique commercialisé sous la marque "NORSOPRYL FM 6020", ci-après dénommé $B_1$, ou bien
- un copolymère butène-1/éthylène, comprenant environ 2 % en moles de motifs éthylène, commercialisé sous la marque "VITRON 1200 S", ci-après dénommé $B_2$.
On utilise l'un des initiateurs de radicaux libres (I) suivants :
- le 2,2'-azo-bis(acétoxypropane), ci-après dénommé $I_1$ (temps de demi-vie : 1 min. à 270°C, 1 h. à 215°C.)
- le 2,2'-azo-bis(2-acétoxy-4-méthylpentane), ci-après dénommé $I_2$ (temps de demi-vie : 1 min. à 260°C, 1 h. à 179°C.)
- le 1,1'-azo-bis(1-formyloxy-cyclohexane), ci-après dénommé $I_3$ (temps de demi-vie : 1 min. à 260°C, 1 h. à 189°C.)
- le 2,3-diphényl-2,3-diméthylbutane (ou bis-cumyle), ci-après dénommé $I_4$,-(temps de demi-vie : 1 min. à 300°C, 1 h. à 230°C.)

Les dispersions d'initiateurs de radicaux libres dans les phases polymériques ont été réalisées dans un malaxeur bi-vis à l'état fondu, pendant une durée inférieure au dixième du temps de demi-vie de l'initiateur (mesuré par analyse enthalpique différentielle en solution à 0,1% en poids dans le benzène) à la température choisie pour effectuer la dispersion. A la sortie de l'extrudeuse, la dispersion est transformée en granulés.

Les compositions de ces dispersions figurent au tableau II ci-après (les proportions sont exprimées en % en poids).

Tableau II

| Dispersion | Phase (B) | | Initiateur | | | |
|---|---|---|---|---|---|---|
| | $B_1$ | $B_2$ | $I_1$ | $I_2$ | $I_3$ | $I_4$ |
| $P_1$ | 99,5 | – | 0,5 | – | – | – |
| $P_2$ | 97,5 | – | 2,5 | – | – | – |
| $P_3$ | 98,7 | – | 1,3 | – | – | – |
| $P_4$ | – | 99,5 | 0,5 | – | – | – |
| $P_5$ | – | 97,5 | 2,5 | – | – | – |
| $P_6$ | – | 97,5 | – | 2,5 | – | – |
| $P_7$ | – | 97,5 | – | – | 2,5 | – |
| $P_8$ | 97,5 | – | – | – | – | 2,5 |

Dans une extrudeuse mono-vis on introduit par l'entrée principale un mélange à sec de polymère (A) et de dispersion d'initiateur dans la phase (B). Le rapport pondéral (B)/(A), exprimé en pourcent, figure dans le tableau III pour chaque exemple. La température de l'extrudeuse (température de sortie matière) est comprise entre 250 et 290°C. Le temps de contact dans l'extrudeuse est de 240 s. Le polymère modifié extrudé est ensuite granulé.

On a déterminé sur ces granulés :

- la viscosité limite $\eta_o^m$ mesurée à 190°C à l'aide de la balance rhéomètre décrite dans le brevet français n° I.462.343 et exprimée en poises,

- le rapport $\eta_o^m / \eta_o^c$,

- l'indice de fluidité $IF_2$ exprimé en dg/min et mesuré selon la norme ASTM D 1238-73 sous 2,16 kg, et

- le rapport des indices de fluidité (RIF) sous 21,6 kg et 2,16 kg.

Les valeurs obtenues figurent également au tableau III.

Les granulés ont été transformés par extrusion-soufflage en films de 50 μm d'épaisseur sur lesquels on a mesuré la résistance à l'impact (RI) selon la norme ASTM D 1790-67, exprimée en grammes dans le tableau III.

Tableau III

| Exemple | (A) | Dispersion | (B)/(A) | Polymère modifié obtenu | | | | |
|---|---|---|---|---|---|---|---|---|
| | | | | $\eta_o^m$ | $\eta_o^m / \eta_o^c$ | $IF_2$ | RIF | RI |
| 1 | $A_1$ | $P_2$ | 1,5 | $3,5.10^6$ | 35 | 0,1 | 100 | 340 |
| 2 | $A_1$ | $P_5$ | 1,5 | $4,0.10^6$ | 40 | 0,1 | 100 | 310 |
| 3 | $A_4$ | $P_2$ | 1,5 | $>2,5.10^6$ | >37 | 0,12 | 90 | 730 |
| 4 | $A_3$ | $P_2$ | 1,5 | $5,5.10^6$ | 70 | 0,06 | 161 | 110 |
| 5 | $A_5$ | $P_2$ | 1,3 | $>2,5.10^6$ | >42 | 0,1 | 102 | 230 |
| 6 | $A_2$ | $P_2$ | 1,5 | $2,5.10^5$ | 8,5 | 0,58 | 48 | 220 |
| 7 | $A_2$ | $P_3$ | 3 | $2,5.10^5$ | 8,5 | 0,54 | 51 | 300 |
| 8 | $A_1$ | $P_2$ | 0,25 | $3,0.10^5$ | 4 | 0,4 | 39 | 200 |
| 9 | $A_1$ | $P_2$ | 0,5 | $5,1.10^5$ | 4,6 | 0,2 | 60 | 260 |
| 10 | $A_1$ | $P_2$ | 0,85 | $2,5.10^6$ | 31,5 | 0,16 | 73 | 310 |
| 11 | $A_1$ | $P_2$ | 1 | $>2,5.10^6$ | >42 | 0,15 | 80 | 340 |
| 12 | $A_1$ | $P_4$ | 7,5 | $2,6.10^6$ | 26 | 0,13 | 66 | 220 |
| 13 | $A_1$ | $P_3$ | 1,5 | $1,0.10^6$ | 16 | 0,32 | 48 | 280 |
| 14 | $A_1$ | $P_6$ | 1,5 | $2,0.10^6$ | 32 | 0,2 | 64 | 400 |
| 15 | $A_1$ | $P_8$ | 1,5 | $4,7.10^5$ | 4,7 | 0,35 | 50 | 320 |
| 16 | $A_2$ | $P_2$ | 3 | $2,5.10^6$ | 50 | 0,38 | 64 | 169 |

EXEMPLES 17 à 20 (comparatifs)

On réalise par malaxage en extrudeuse mono-vis des compositions contenant un polymère (A) et une phase (B), sans initiateur de radicaux libres. Leurs proportions respectives, exprimées en % en poids, et les résultats des mesures effectuées sur les compositions obtenues figurent au tableau IV.

Tableau IV

| Exemple | Polymère (A) | | Phase (B) | | $IF_2$ | RIF | RI |
|---|---|---|---|---|---|---|---|
| 17 | $A_2$ | 97,0 | $B_1$ | 3,0 | 2,15 | 25 | 80 |
| 18 | $A_1$ | 98,5 | $B_1$ | 1,5 | 1 | 26 | 204 |
| 19 | $A_1$ | 98,5 | $B_2$ | 1,5 | 1 | 26 | 161 |
| 20 | $A_1$ | 92,5 | $B_2$ | 7,5 | 0,9 | 33 | 155 |

EXEMPLES 21 à 23

On utilise ici le polymère $A_6$ dont les principales caractéristiques figurent au tableau I ci-dessus, et qui constitue l'exemple comparatif 21.

Ce polymère est modifié, dans les conditions opératoires des exemples 1 à 16 ci-dessus, au moyen de la dispersion $P_2$. Le rapport pondéral $(B_1)/(A_6)$, exprimé en pourcent, figure au tableau V pour chaque exemple. Sur le polymère modifié, on mesure :
- l'indice $IF_2$ et le rapport RIF comme définis précédemment,
- l'injectabilité INJ mesurée en adaptant la norme ASTM D-1329 comme suit : on utilise une presse horizontale et une température du moule-spirale de 50°C. L'injectabilité est la longueur (exprimée en mm) de la spirale obtenue après injection de matière à 230°C.
- la contrainte au seuil d'écoulement dans le sens longitudinal -(CSE) mesurée selon la norme ASTM D 638-80 et exprimée en $daN/cm^2$, et
- la tenue à l'impact IMP exprimée en joules à 23°C et mesurée au moyen d'un impactomètre ROSAND PRECISION, avec une masse tombante de 10 kg à une vitesse de 4,4 m/s, sur un échantillon de 1,7 mm d'épaisseur.

EXEMPLES 24 à 26

On utilise un homopolymère de l'éthylène $A_7$ dont les principales caractéristiques figurent au tableau I ci-dessus et qui constitue l'exemple comparatif 24. Ce polymère est modifié dans les conditions décrites aux exemples 1 à 16 en utilisant la dispersion $P_2$. Le rapport pondéral $(B_1)/(A_7)$, exprimé en pourcent, figure au tableau V pour chaque exemple. On mesure sur les polymères modifiés l'indice $IF_2$ et l'injectabilité INJ, dans les conditions mentionnées aux exemples 21 à 23.

Les résultats obtenus figurent au tableau V.

Tableau V

| Exemple | (B)/(A) | $IF_2$ | RIF | INJ | CSE | IMP |
|---|---|---|---|---|---|---|
| 21 | 0 | 20 | | 600 | 80 | 2,3 |
| 22 | 3 | 3,8 | 167 | 500 | 100 | 3,1 |
| 23 | 8 | 0,8 | 57 | 425 | 160 | 4,5 |
| 24 | 0 | 15 | | 520 | | |
| 25 | 2 | 2,6 | 43 | 430 | | |
| 26 | 4 | 0,7 | 75 | 390 | | |

EXEMPLE 28

On réalise l'enduction d'un film d'aluminium en continu dans les conditions suivantes. Le polymère $A_6$, déjà décrit ci-dessus, a été modifié, dans les conditions des exemples 1 à 16, au moyen de 5% en poids de dispersion $P_2$ (le polymère modifié acquiert un indice de fluidité $IF_2$= 6 dg/min.) puis extrudé et transformé en film au moyen d'une filière plate. La température de la matière à la sortie de la filière est d'environ 310°C. Le film obtenu est déposé en continu sur une feuille d'aluminium, déroulée en continu à partir d'une bobine à la vitesse de 100 m/min, à raison d'environ 35 $g/m^2$. La résistance au pelage, mesurée selon la norme ASTM D 903-49 (largeur de l'éprouvette : 15 mm) est égale à 504 g.

EXEMPLE 29 (comparatif)

Dans les mêmes conditions qu'à l'exemple 28, on a enduit un film d'aluminium au moyen d'un polymère d'éthylène obtenu par voie radicalaire ayant même densité et même indice de fluidité.

On a mesuré une résistance au pelage de 234 g.

**Revendications**

1. Compositions de polymères modifiés de l'éthylène caractérisées en ce qu'elles contiennent :
a) de 90 à 99,8 % en poids d'au moins un polymère modifié de l'éthylène et, le cas échéant, d'au moins une α-oléfine ayant de 3 à 12 atomes de carbone, ledit polymère contenant au moins 80 % en moles de motifs dérivés de l'éthylène et,
b) de 0,2 à 10 % en poids d'au moins une phase polymérique comprenant au moins un polymère contenant au moins 90 % en moles de motifs dérivés d'au moins une α-oléfine ayant de 3 à 12 atomes de carbone et au plus 10 % en moles de motifs dérivés de l'éthylène,
lesdites compositions ayant une viscosité limite mesurée comprise entre 1,5 et 100 fois leur viscosité limite calculée à partir de la distribution des masses moléculaires.
2. Compositions selon la revendication 1 caractérisées en ce que le polymère entrant dans la composition de la phase polymérique est le polypropylène.
3. Compositions selon la revendication 1 caractérisées en ce que le polymère entrant dans la composition de la phase polymérique est un poly(butène-1-éthylène).
4. Procédé de fabrication de compositions selon l'une des revendications 1 à 3 par modification d'un polymère (A) contenant au moins 80 % en moles de motifs dérivés de l'éthylène et au plus 20 % en moles de motifs dérivés d'au moins une α-oléfine ayant de 3 à 12 atomes de carbone, au moyen d'au moins un initiateur de radicaux libres mis en présence dudit polymère (A) à une température supérieure à la température de fusion dudit polymère (A) pendant une durée supérieure ou égale au dixième du temps de demi-vie initiateur à la température considérée, caractérisé en ce que l'initiateur de radicaux libres est, préalablement à sa mise en présence du polymère (A), dispersé dans au moins une phase polymérique (B) comprenant au moins un polymère contenant au moins 90% en moles de motifs dérivés d'au moins une α-oléfine ayant de 3 à 12 atomes de carbone et au plus 10 % en moles de motifs dérivés de l'éthylène, ladite phase (B) étant présente en quantité telle que sa proportion dans la composition résultant soit comprise entre 0,2 et 10 % en poids.
5. Procédé selon la revendication 4, caractérisé en ce que la mise en présence est réalisée dans une machine de transformation des polymères.
6. Procédé selon l'une des revendications 4 et 5, caractérisé en ce que la phase polymérique (B) contient, pour 100 parties en poids, de 0,02 à 10 parties en poids de l'initiateur de radicaux libres.
7. Procédé selon l'une des revendications 4 à 6, caractérisé en ce que l'initiateur de radicaux libres est choisi parmi les composés peroxygénés, les composés diazoïques et les hydrocarbures possédant des liaisons carbone-carbone labiles.
8. Procédé selon la revendication 7, caractérisé en ce que le composé diazoïque est un 2,2'-azo-bis(acyloxyalcane).
9. Application d'une composition selon l'une des revendications 1 à 3 ou obtenue selon l'une des revendications 4 à 8, à l'obtention d'articles industriels par transformation desdites compositions par une technique choisie parmi l'extrusion-soufflage, l'extrusion par filière plate, l'injection et l'enduction.

**Patentansprüche**

1. Zusammensetzungen aus modifizierten Äthylenpolymeren, dadurch gekennzeichnet, daß sie enthalten:
a) 90 bis 99,8 Gew.-% mindestens eines modifizierten Polymers von Äthylen und gegebenenfalls mindestens einem α-Olefin mit 3 bis 12 Kohlenstoffatomen, wobei das genannte Polymer mindestens 80 Mol.-% an von Äthylen abstammenden Einheiten enthält, und
b) 0,2 bis 10 Gew.-% mindestens einer polymeren Phase enthaltend mindestens ein Polymer, das mindestens 90 Mol.-% an von mindestens einem α-Olefin mit 3 bis 12 Kohlenstoffatomen abstammenden Einheiten und höchstens 10 Mol.-% an von Äthylen abstammenden Einheiten enthält,
wobei die Zusammensetzungen eine gemessene Grenzviskosität besitzen, die zwischen dem 1,5fachen und 100fachen ihrer aus der Molekularmassenverteilung berechneten Grenzviskosität beträgt.
2. Zusammensetzungen nach Anspruch 1, dadurch gekennzeichnet, daß das Bestandteil der Zusammensetzung der polymeren Phase bildende Polymer Polypropylen ist.
3. Zusammensetzungen nach Anspruch 1, dadurch gekennzeichnet, daß das Bestandteil der Zusammensetzung der polymeren Phase bildende Polymer ein Poly(Buten-1-Äthylen) ist.
4. Verfahren zur Herstellung von Zusammensetzungen nach einem der Ansprüche 1 bis 3 durch Modifizieren eines Polymers (A), enthaltend mindestens 80 Mol.-% an von Äthylen abstammenden Einheiten und höchstens 20 Mol.-% an von mindestens einem α-Olefin mit 3 bis 12 Kohlenstoffatomen abstammenden Einheiten, mittels eines Initiators in Form freier Radikale, der mit dem genannten Polymer (A) bei einer oberhalb der Schmelztemperatur des letzteren liegenden Temperatur und während einer Zeitspanne, die größer als ein oder gleich ist einem Zehntel der Halbwertszeit des genannten Initiators bei der berücksichtigten Temperatur, zusammengebracht wird, dadurch gekennzeichnet, daß der Initiator in Form freier Radikale vor seinem Zusammenbringen mit dem Polymer (A) in mindestens einer polymeren Phase (B) dispergiert wird, die mindestens ein mindestens 90 Mol.-% an von einem α-Olefin mit 3 bis 12 Kohlenstoffatomen abstammenden Einheiten und höchstens 10 Mol.-% an von Äthylen abstammenden Einheiten enthaltendes Polymer enthält, wobei die genannte Phase (B) in einer solchen Menge vorliegt, daß ihr Anteil in der resultierenden Zusammensetzung zwischen 0,2 und 10 Gew.-% beträgt.

5. Verfahren nach Anspruch 4, dadurch gekennzeichnet, daß das Zusammenbringen in einer Verarbeitungsmaschine für Polymere erfolgt.

6. Verfahren nach Anspruch 4 oder 5, dadurch gekennzeichnet, daß die polymere Phase (B) auf 100 Gewichtsteile 0,02 bis 10 Gewichtsteile des Initiators in Form freier Radikale enthält.

7. Verfahren nach einem der Ansprüche 4 bis 6, dadurch gekennzeichnet, daß der Initiator in Form freier Radikale ausgewählt wird aus den Peroxy(genierten)-Verbindungen, den Diazoverbindungen und den labile C–C-Bindungen aufweisenden Kohlenwasserstoffen.

8. Verfahren nach Anspruch 7, dadurch gekennzeichnet, daß die Diazoverbindung ein 2,2'-Azobis(acyloxyalkan) ist.

9. Verwendung einer Zusammensetzung nach einem der Ansprüche 1 bis 3 oder einer nach einem der Ansprüche 4 bis 8 erhaltenen Zusammensetzung zur Herstellung von Industrieartikeln durch Verarbeiten der genannten Zusammensetzungen mittels einer Technik ausgewählt aus der Gruppe bestehend aus dem Extrusionsblasen, Extrudieren mit Breitschlitzdüse, Spritzgießen und Auftragen.

**Claims**

1. Compositions of modified polymers of ethylene, characterized in that they contain:
a) from 90 to 99.8% by weight of at least one modified polymer of ethylene and, where appropriate, at least one α-olefin having from 3 to 12 carbon atoms, the said polymer containing at least 80 mol% of units derived from ethylene, and
b) from 0.2 to 10% by weight of at least one polymer phase comprising at least one polymer containing at least 90 mol% of units derived from at least one α-olefin having from 3 to 12 carbon atoms, and at most 10 mol% of units derived from ethylene,
the said compositions having a measured limiting viscosity of between 1.5 and 100 times their limiting viscosity calculated from the distribution of the molecular weights.

2. Compositions according to Claim 1, characterized in that the polymer which takes part in the composition of the polymer phase is polypropylene.

3. Compositions according to Claim 1, characterized in that the polymer which takes part in the composition of the polymer phase is a poly(1-butene/ethylene).

4. Process for manufacturing compositions according to one of Claims 1 to 3 by modification of a polymer (A) containing at least 80 mol% of units derived from ethylene and at most 20 mol% of units derived from at least one α-olefin having from 3 to 12 carbon atoms, by means of at least one free-radical initiator brought into contact with the said polymer (A), at a temperature above the melting point of the said polymer (A) for a time longer than or equal to one tenth of the half-life of the said initiator at the temperature in question, characterized in that the free-radical initiator, prior to being brought into contact with the polymer (A), is dispersed in at least one polymer phase (B) comprising at least one polymer containing at least 90 mol% of units derived from at least one α-olefin having from 3 to 12 carbon atoms and at most 10 mol% of units derived from ethylene, the said phase (B) being present in an amount such that its proportion in the resulting composition is between 0.2 and 10% by weight.

5. Process according to Claim 4, characterized in that the free-radical initiator and the polymer are brought into contact in a polymer processing machine.

6. Process according to one of Claims 4 and 5, characterized in that the polymer phase (B) contains from 0.02 to 10 parts by weight of the free-radical initiator for 100 parts by weight.

7. Process according to one of Claims 4 to 6, characterized in that the free-radical initiator is chosen from peroxy compounds, diazo compounds and hydrocarbons possessing labile carbon-carbon bonds.

8. Process according to Claim 7, characterized in that the diazo compound is a 2,2'-azobis(acyloxyalkane).

9. Application of a composition according to one of Claims 1 to 3, or obtained according to one of claims 4 to 8, to the production of industrial items by processing the said compositions by a technique chosen from extrusion blowing, extrusion through a slot die, injection and coating.